(19) Europäisches Patentamt
European Patent Office
Office européen des brevets

(11) **EP 2 982 944 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(51) Int Cl.:
***G01G 19/08*** *(2006.01)*

(21) Anmeldenummer: **15179781.8**

(22) Anmeldetag: **05.08.2015**

(54) **FAHRZEUGRADDREHZAHLBASIERTE ERMITTLUNG ODER ABSCHÄTZUNG EINES LASTGEWICHTS EINER DURCH EIN GEWERBLICHES FAHRZEUG AUFGENOMMENEN LAST**

VEHICLE WHEEL SPEED BASED MONITORING AND/OR ESTIMATION OF A LOAD WEIGHT OF AN INDUSTRIAL VEHICLE LOAD

DETERMINATION EN FONCTION DE VITESSE DE ROTATION DE ROUE DE VEHICULE OU EVALUATION D'UN POIDS DE CHARGE D'UNE CHARGE INSTALLEE SUR UN VEHICULE ROULANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2014 DE 102014215509**

(43) Veröffentlichungstag der Anmeldung:
**10.02.2016 Patentblatt 2016/06**

(73) Patentinhaber: **Jungheinrich Aktiengesellschaft 22047 Hamburg (DE)**

(72) Erfinder: **Hämmerl, Robert 84098 Hohenthann (DE)**

(74) Vertreter: **Jordan, Volker Otto Wilhelm et al Weickmann & Weickmann Patent- und Rechtsanwälte PartmbB Postfach 860 820 81635 München (DE)**

(56) Entgegenhaltungen:
**EP-A1- 2 502 759 DE-A1-102007 047 399**

**Beschreibung**

Die Erfindung betrifft ein Verfahren zur Ermittlung oder Abschätzung eines Lastgewichts einer durch ein gewerbliches Fahrzeug, insbesondere durch ein Flurförderzeug, etwa ein Gabelstapler, aufgenommenen Last und ein entsprechendes gewerbliches Fahrzeug, insbesondere ein Flurförderzeug, wie etwa ein Gabelstapler, der mit Mitteln ausgestattet ist, um auf Basis dieses Verfahrens das Lastgewicht einer aufgenommenen Last zu ermitteln oder abzuschätzen.

Herkömmliche Flurförderzeuge weisen regelmäßig keine technischen Mittel zur Durchführung einer Gewichtsmessung in Bezug auf die aufgenommene Last auf. Mittlerweile wurden bei Flurförderzeugen technische Mittel für eine solche Gewichtsmessung eingeführt, die aber alle spezielle Sensorelemente benötigen. So ist es bekannt, die Gewichtsmessung über eine Messung des Hydraulikdruckes, speziell des im Hubzylinder des Hubmasts herrschenden Hydraulikdrucks, durchzuführen. Eine Gewichtsmessung kann herkömmlich auch mittels einer Waage im Anbaugerät oder mittels von Druckmessdosen im Kettenanker erfolgen. Bei allen diesen herkömmlichen Lösungen zur Gewichtsmessung der Last sind zusätzliche Sensorelemente nötig, die sich nur auf diese Gewichtsmessung beziehen.

In einem Flurförderzeug ist eine Messung des Lastgewichts der aufgenommenen Last generell von großem Nutzen. So könnte auf Basis einer Gewichtsmessung die Fahrdynamik lastabhängig gestaltet werden. Problematisch an den herkömmlichen Lösungen, insbesondere einer Gewichtsmessung über die Messung des Hydraulikdrucks mittels eines Gewichtssensors ist, dass eine solche Messung nur schwer auf eine korrekte Funktion überprüft werden kann. So können sich die mechanischen Verhältnisse im Hubgerüst ändern und es können sich die hydraulischen Verhältnisse in der Hydraulikanlage ändern, was beides das Gewichtsmessergebnis verfälschen kann. Da der Betriebssicherheit eine hohe Bedeutung zukommt, lassen sich solche Gewichtsmessungen schwerlich etwa für die Auswahl lastabhängiger Fahrprofile nutzen, so lange nicht ein weiteres, unabhängiges Messsystem vorhanden ist, welches eine Plausibilitätsüberprüfung für die vorgenommene Gewichtsmessung ermöglicht.

Ein Verfahren zur Berechnung eines Radverschleißes aus einer Zunahme der Umdrehungsdrehzahl als Maß für die Verringerung des Raddurchmessers ist aus der DE 10 2011 053 963 A1 bekannt.

Die DE 10 2011 076 815 A1 und die DE 10 2011 076 816 A1 stellen jeweils ein Verfahren zum Steuern oder/und Regeln zumindest eines elektrischen Fahrantriebs eines Flurförderzeugs bereit, welches das Auftreten von Schlupf an den Antriebsrädern aufgrund des erzeugten Drehmoments zum Beschleunigen oder Verzögern des Flurförderzeugs vermeidet. Nach beiden Offenlegungsschriften ist eine Nutzlasterkennung realisiert, indem der durch die Nutzlast erzeugte Hydraulikdruck in einem Hubzylinder eines Hubmasses des jeweiligen Gabelstaplers erfasst wird.

Nach der DE 10 2011 076 816 A1 wird im Zusammenhang mit der Schlupfvermeidung eine Änderung der Drehzahlverhältnisse zwischen den Fahrzeugrädern in Abhängigkeit von der Nutzlast berücksichtigt, um eine Toleranzschwelle für die Schlupferkennung niedrig einstellen zu können. Es werden aus dem gemessenen Hydraulikdruck die effektiven Radien an den Fahrzeugrädern zumindest näherungsweise berechnet, um diese bei der Fahrzeuggeschwindigkeitsberechnung bzw. der Drehzahlmessung für die Schlupferkennung zu berücksichtigen.

Aus der DE 10 2007 047 399 A1 sind zwei Methoden zur Ermittlung der Schwerpunktlage eines Kraftfahrzeugs bekannt. Die erste Ermittlungsmethode basiert auf den Vergleich von paarweisen Differenzen von direkt gemessenen Reifendrücken und Reifendrücken, die aus gemessenen Drehzahldifferenzen und zuvor bestimmten Abrollumfängen ermittelt werden. Bei der zweiten Ermittlungsmethode werden die während einer Kurvenfahrt auftretenden dynamischen Abrollumfänge mit zuvor während einer Einlernfahrt bestimmten und in einem Kennfeld gespeicherten Abrollumfängen verglichen. Bei Kenntnis der absoluten Fahrgeschwindigkeit, beispielsweise aus satellitengestützten Daten, kann auf die Gesamtbeladung des Fahrzeugs geschossen werden.

Die EP 2 502 759 A1 beschreibt ein auf gemessene Raddrehzahlen basiertes Verfahren zur Ermittlung der Fahrzeugmasse. Dabei wird aus den Raddrehzahlen eine Radbeschleunigung berechnet, aus welcher wiederum eine für die Beladung charakteristische Frequenz-Charakteristik der Vorderund Hinterräder gebildet wird. Die Ermittlung der Masse erfolgt anhand des Verhältnisses von integrierten Werten der Frequenz-Charakteristika unter Verwendung von Methoden der höheren Mathematik, wie beispielsweise der Fourier-Transformation.

Vor diesem Hintergrund ist es eine Aufgabe der Erfindung, ein einfaches Verfahren zur Ermittlung oder Abschätzung des Lastgewichts bereitzustellen, welches keine dezidiert für eine Gewichtsmessung bestimmte Sensoren benötigt.

Nach einem Aspekt soll speziell ein Verfahren zur Ermittlung oder Abschätzung des Lastgewichts bereitgestellt werden, bei dem die Ermittlung oder Abschätzung des Lastgewichts zur Plausibilitätsüberprüfung der Gewichtsmessung mittels wenigstens eines dezidierten Sensorelements dient.

Nach einem anderen Aspekt soll ein Verfahren zur Ermittlung oder Abschätzung des Lastgewichts bereitgestellt werden, welches ohne eine Gewichtsmessung mittels dezidierter Sensorelemente einsetzbar ist, also eine herkömmliche Gewichtsmessung mittels wenigstens einen dezidierten Sensorelemente ersetzen kann, wodurch der technische Aufwand für eine herkömmliche Gewichtsmessung erspart wird.

Zur Lösung dieser Aufgaben stellt die Erfindung ein Verfahren zur Ermittlung oder Abschätzung eines Lastgewichts einer durch ein gewerbliches Fahrzeug, insbesondere durch ein Flurförderzeug, etwa einen Gapelstapler, aufgenommenen Last bereit, welches umfasst:

a) Bestimmen eines Drehzahlverhältnisses zwischen einer ersten Drehzahl wenigstens eines von einer in einer Lastaufnahme des Fahrzeugs aufgenommenen Last belasteten ersten Rads und einer zweiten Drehzahl wenigstens eines von einer in der Lastaufnahme aufgenommenen Last weniger stark oder nicht belasteten oder durch eine in der Lastaufnahme aufgenommene Last entlasteten zweiten Rads des fahrenden Fahrzeugs, welches die Last in der Lastaufnahme aufgenommen hat;
b) Ermitteln oder Abschätzen des Lastgewichts der aufgenommenen Last auf Grundlage des bestimmten Drehzahlverhältnisses und vorgegebener Referenzdaten.

Der Erfindungsvorschlag ermöglicht die Ermittlung oder Abschätzung des Lastgewichts über die Veränderung der Radpressung an der lastnahen und lastfernen Fahrzeugachse. Durch das Eigengewicht des Fahrzeugs werden die Lasträder und das von der Last fernere Rad bzw. die von der Last ferneren Räder (typischerweise das Antriebsrad bzw. die Antriebsräder) in einem bestimmten Verhältnis gepresst, wodurch sich für alle Räder ein vom idealen Kreis abweichender Umfang einstellt. Es resultieren für eine gegebene Fahrzeuggeschwindigkeit unterschiedliche Drehgeschwindigkeiten (Raddrehzahl pro Zeiteinheit) für die verschiedenen Räder bzw. für einen gegebenen Fahrweg unterschiedliche Radumdrehungszahlen für die verschiedenen Räder.

Durch die Aufnahme einer Last, beispielsweise auf den Gabeln eines Gabelstaplers, werden die Lasträder stärker und das von der Last fernere wenigstens eine Rad (ggf. das Antriebsrad bzw. die Antriebsräder) weniger belastet oder gar entlastet. Dadurch stellt sich ein neues, lastabhängiges Verhältnis der Radumdrehungen bzw. Radumdrehungsgeschwindigkeiten ein, aufgrund einer lastabhängigen Veränderung der Radumfänge, was zur Ermittlung des Lastgewichts genutzt werden kann, beispielsweise zur Plausibilisierung einer über wenigstens einen Drucksensor erfolgten Gewichtsmessung, oder auch zur Realisierung des einzigen Messsystems des Fahrzeugs für die Gewichtsmessung dienen kann.

Dient die Ermittlung oder Abschätzung des Lastgewichts auf Basis der Änderung der Radumdrehungen bzw. Raddrehgeschwindigkeiten zur Realisierung des einzigen Messsystems des Fahrzeugs zur Gewichtsmessung, so kann eine hinreichende Zulässigkeit der Messung dadurch erreicht werden, dass das Fahrzeug als Basis für die Ermittlung oder Abschätzung des Lastgewichts eine Mindeswegdistanz zurücklegt, beispielsweise in einem Schmalgang. Es kann dann aus den ermittelten Drehzahlverhältnissen der beiden Radachsen das Lastgewicht mit hinreichender Genauigkeit ermittelt bzw. abgeschätzt werden.

Dem Erfindungsvorschlag liegt ein durchaus beachtlicher Effekt zugrunde. Je nach Fahrzeugtyp, insbesondere je nach Fahrzeug-Eigengewicht und den Raddurchmessern, wird durch eine aufgenommene Last eine auf erfassten Radumdrehungen, beruhende Wegmessung beispielsweise um 0,4 bis 1,5 % verfälscht. Hierbei handelt es sich nur um den sich auf das Lastrad bzw. die Lasträder beziehenden Effekt. Dieser Effekt ist so groß, dass er bei herkömmlichen Flurförderfahrzeugen im Falle eines auf den Radumdrehungen beruhenden Positioniersystems mittels einer dezidierten Gewichtsmessung regelmäßig kompensiert werden muss. Nutzt man umgekehrt diesen Effekt für die Gewichtsmessung, so ist eine hinreichende Genauigkeit der Gewichtsmessung nur eine Frage der Auflösung verwendeter Drehzahlsensoren und ggf. der Auflösung eines Wegmesssystems und ggf. der hinreichenden Länge der der Ermittlung bzw. Abschätzung zugrunde liegenden Messstrecke.

Allgemein wird vorgeschlagen, dass das Drehzahlverhältnis bestimmt wird, indem beim Fahren des Fahrzeugs eine über eine definierten Strecke oder in einem definierten Zeitintervall auftretende Anzahl von Umdrehungen des wenigstens einen ersten Rads und eine beim Fahren über die definierte Strecke oder in dem definierten Zeitintervall auftretende Anzahl von Umdrehungen des wenigstens einen zweiten Rads direkt oder indirekt gemessen oder bestimmt werden, dass hieraus das Drehzahlverhältnis bestimmt wird und dass aus dem so bestimmten Drehzahlverhältnis das Lastgewicht ermittelt oder abgeschätzt wird.

Ferner wird allgemein vorgeschlagen, dass das Drehzahlverhältnis für eine aufgenommene Last wenigstens einmal aus Sensordaten umfassend Drehzahldaten oder/und Drehgeschwindigkeitsdaten eines dem ersten Rad zugeordneten Sensors und Drehzahldaten oder/und Drehgeschwindigkeitsdaten eines dem zweiten Rad zugeordneten Sensors bestimmt wird, um das Lastgewicht zu ermitteln oder abzuschätzen. Dabei kann man vorsehen, dass das Drehzahlverhältnis für eine aufgenommene Last wiederholt oder kontinuierlich aus den Sensordaten bestimmt wird, um wiederholt oder kontinuierlich das Lastgewicht zu ermitteln oder abzuschätzen.

Verwendet man eine Mindestwegstrecke zur Ermittlung oder Abschätzung des Lastgewichts, so dürfte bei Verwendung eines Wegmesssystems mit hinreichender Auflösung regelmäßig eine Mindestwegstrecke von einem Meter ausreichend sein. So können beispielsweise Wegstrecken zwischen ohnehin vorgesehenen Wegmarken (z. B. Transpondern) im Boden als Messstrecke verwendet werden. Wird ein das Verfahren realisierendes Messsystem zur Plausibilisierung eines anderen, dezidierten Gewichtsmesssystems verwendet, so kann das erfindungsgemäße Messsystem permanent im Hintergrund laufen und wird mit zunehmender Wegdistanz genauere Ergebnisse liefern.

Zweckmäßig kann man vorsehen, dass die Referenzdaten ein Lastfrei-Referenz-Drehzahlverhältnis zwischen dem wenigstens einen ersten Rad und dem wenigstens einem zweiten Rad für das Fahrzeug ohne aufgenommene Last bei einem Ausgangszustand der Räder, vorzugsweise bei verschleißfreien Rädern, umfassen. Weiterhin wird vorgeschlagen, dass die Referenzdaten wenigstens ein Last-Referenz-Drehzahlverhältnis zwischen dem wenigstens einen ersten Rad und dem wenigstens einem zweiten Rad für das Fahrzeug mit einer bzw. einer jeweiligen aufgenommenen definierten Kalibrierungslast bei einem Ausgangszustand der Räder, vorzugsweise bei verschleißfreien Rädern, umfassen.

Eine bevorzugte Ausführungsform zeichnet sich dadurch aus, dass das Lastgewicht mittels des bestimmten Drehzahlverhältnisses aus der Lastfrei-Referenz-Drehzahlverhältnis und dem wenigstens einen Last-Referenz-Drehzahlverhältnis auf Basis des Lastgewichts der Kalibrierungslast bzw. der jeweiligen Kalibrierungslast und ggf. eines Fahrzeuggewichts des Fahrzeugs ohne aufgenommene Last interpoliert wird.

Beispielsweise können das Lastfrei-Referenz-Drehzahlverhältnis und das Last-Referenz-Drehzahlverhältnis einmal in der Produktion des gewerblichen Fahrzeugs durch eine jeweilige Einlernfahrt ermittelt und die entsprechenden Referenzwerte dann in der Steuerung des Fahrzeugs abgespeichert werden. Im Betrieb werden dann die Zwischenwerte interpoliert. Man kann durchaus aber auch mehrere Last-Referenz-Drehzahlverhältnisse auf Basis unterschiedlicher Lastgewichte ermitteln und in der Steuerung abspeichern, um im Betrieb dann besser die Zwischenwerte interpolieren zu können.

Bevorzugt wird ein Radverschleiß unabhängig von der Gewichtsmessung ermittelt. Die Gewichtsmessung, also die Ermittlung bzw. Abschätzung des Lastgewichts, kann dann besonders vorteilhaft auf bereits verschleißkompensierten Drehzahlwerten aufsetzen, wobei das Lastgewicht zweckmäßig aus dem Drehzahlverhältnis ohne Last und dem Drehzahlverhältnis mit der Maximallast linear interpoliert werden kann.

Erfindungsgemäß wird ein Verschleißzustand der Räder bestimmt und bei der Ermittlung oder Abschätzung des Lastgewichts berücksichtigt. Es ist vorgesehen, dass der Verschleißzustand der Räder am Fahrzeug ohne aufgenommene Last bestimmt wird, indem beim Fahren des Fahrzeugs ohne aufgenommene Last über eine definierte Strecke eine auftretende Anzahl von Umdrehungen des wenigstens einen ersten Rads und eine beim Fahren über die definierte Strecke auftretende Anzahl von Umdrehungen des wenigstens einen zweiten Rads direkt oder indirekt gemessen oder bestimmt werden. Dabei kann man zweckmäßig vorsehen, dass hieraus der jeweilige Verschleißzustand der Räder oder/und ein den Verschleißzustand berücksichtigendes Referenz-Drehzahlverhältnis zwischen dem wenigstens einen ersten Rad und dem wenigstens einem zweiten Rad für das Fahrzeug ohne aufgenommene Last oder/und Drehzahl-Korrekturwerte für die Räder bestimmt werden. Es wird so eine hohen Genauigkeit für die Lastgewichtbestimmung bzw. Lastgewichtabschätzung erreicht. Beispielsweise können die Referenzdaten, auf deren Grundlage das Lasgewicht ermittelt oder abgeschätzt wird, den Verschleißzustand bzw. wenigstens eines von dem Verschleißzustand, dem Referenz-Drehzahlverhältnis und den Drehzahl-Korrekturwerten umfassen. In diesem Zusammenhang wird weiter vorgeschlagen, dass die jeweilige Anzahl von Umdrehungen bzw. die Drehzahldaten oder/und Drehgeschwindigkeitsdaten mittels der Drehzahl-Korrekturwerte hinsichtlich des Verschleißzustands der Räder kompensiert und das Drehzahlverhältnis aus kompensierten Drehzahldaten bzw. Drehgeschwindigkeitsdaten bestimmt wird, um das Lastgewicht zu ermitteln oder abzuschätzen.

Bei den Rädern des Fahrzeugs kann es sich um so genannte BandagenRäder handeln, die von einer Radfelge und einem so genannten Bandagen-Reifen gebildet sind. Soweit im Rahmen des Verfahrens ein Auftreten einer Anzahl von Umdrehungen über eine definierte Fahrstrecke zu messen oder zu bestimmen ist, können Wegmarken im Prinzip beliebiger Art (beispielsweise optische Wegmarken oder Transponder) zum Einsatz kommen, die die Fahrstrecke definieren. Es können beispielsweise ohnehin in einem Schmalgang oder dergleichen eingebrachte Wegmarken verwendet werden.

Das erfindungsgemäße Verfahren wird bevorzugt als Verfahren zum Steuern oder/und Regeln zumindest eines Fahrantriebs eines gewerblichen Fahrzeugs, insbesondere eines Flurförderzeugs, etwa einen Gabelstapler, implementiert. Die Erfindung stellt allgemein ein Verfahren zum Steuern oder/und Regeln zumindest eines Fahrantriebs eines gewerblichen Fahrzeugs, Insbesondere eines Flurförderzeugs, etwa ein Gabelstapler, bereit, welches die Ermittlung oder Abschätzung des Lastgewichts einer durch das Fahrzeug aufgenommenen Last gemäß dem vorstehend beschriebenen Verfahren zur Ermittlung oder Abschätzung eines Lastgewichts einer aufgenommenen Last umfasst.

Das Fahrzeug braucht keinen von der Bestimmung des Drehzahlverhältnisses unabhängigen Lastsensor zur Bestimmung des Lastgewichts einer vom Fahrzeug aufgenommenen Last aufweisen. Man kann aber sehr zweckmäßig vorsehen, dass das Fahrzeug wenigstens einen von der Bestimmung des Drehzahlverhältnisses unabhängigen Lastsensor zur Bestimmung des Lastgewichts einer vom Fahrzeug aufgenommenen Last aufweist und dass das Lastgewicht zusätzlich auf Basis des bestimmten Drehzahlverhältnisses ermittelt oder geschätzt wird und beispielsweise zur Plausibilitätsüberprüfung der Lastgewichtsbestimmung mittels des Lastsensors dient.

Es wird speziell daran gedacht, dass eine Fahrdynamik des Fahrzeugs in Abhängigkeit von dem Lastgewicht einer aufgenommenen Last gestaltet wird oder/und dass ein dem Lastgewicht zugeordnetes Fahrprofil aus mehreren unterschiedlichen Lastgewichten bzw. Lastgewichtsbereichen zugeordneten Fahrprofilen ausgewählt wird.

Allgemein wird daran gedacht, dass das wenigstens eine erste Rad ein vorderes Rad und das wenigstens eine zweite Rad ein hinteres Rad des Fahrzeugs ist.

Ferner stellt die Erfindung ein gewerbliches Fahrzeug, insbesondere ein Flurförderzeug (wie etwa eine Gabelstapler) bereit, welches wenigstens einen Fahrantrieb, wenigstens eine Lastaufnahme und wenigstens ein von einer in der Lastaufnahme des Fahrzeugs aufgenommenen Last belastetes erstes Rad und wenigstens ein von einer in der Lastaufnahme aufgenommenen Last weniger stark oder nicht belastetes oder durch eine in der Lastaufnahme aufgenommene Last entlastetes zweites Rad aufweist, wobei eine Steuerung des Fahrzeugs oder dessen Fahrantriebs mit wenigstens einem dem/einem ersten Rad zugeordneten ersten Drehzahlsensor und mit wenigstens einem dem/einem zweiten Rad des Fahrzeugs zugeordneten zweiten Drehzahlsenor gekoppelt ist. Erfindungsgemäß ist vorgesehen, dass die Steuerung dafür ausgeführt oder programmiert ist, ein Drehzahlverhältnis zwischen einer durch den ersten Drehzahlsensor erfassten ersten Drehzahl des ersten Rads und einer durch den zweiten Drehzahlsensor erfassten zweiten Drehzahl des zweiten Rads zu bestimmen und hieraus das Lastgewicht einer in der Lastaufnahme aufgenommenen Last zu ermitteln oder abzuschätzen, um wenigstens eine sich auf das Lastgewicht beziehende oder das Lastgewicht berücksichtigende Funktion, insbesondere eine Steuer- oder/und Regelfunktion, zu erfüllen.

Bevorzugt ist die Steuerung dafür ausgeführt oder programmiert, das erfindungsgemäße Verfahren zur Ermittlung oder Abschätzung eines Lastgewichts bzw. das erfindungsgemäße Verfahren zum Steuern oder/und Regeln auszuführen.

Eine besonders bevorzugte Ausführungsform des erfindungsgemäßen Fahrzeugs zeichnet sich dadurch aus, dass die Steuerung mit wenigstens einem auf optische oder elektrische oder magnetische oder elektromagnetische Markierungen oder/und auf Transponder ansprechenden Sensor oder Gerät des Fahrzeugs gekoppelt ist, um mittels des ersten und des zweiten Drehzahlsensors beim Fahren über eine durch wenigstens eine Markierung oder/und wenigstens einen Transponder definierte Referenzfahrstrecke auftretende Umdrehungen des wenigstens einen ersten Rads und des wenigstens zweiten Rads zu erfassen und bei der Durchführung des Verfahrens auszuwerten, etwa zur Bestimmung eines Verschleißzustands der Räder im Falle eines Fahrens ohne in die Lastaufnahme aufgenommene Last oder/und zur Ermittlung bzw. Abschätzung des Lastgewichts mit einer definierten Genauigkeit.

Die Erfindungsvorschläge lassen sich ohne großen sensortechnischen Aufwand implementieren, zumal verschiedene Flurförderzeugtypen, beispielsweise so genannte Schmalgangstapler, häufig schon für die Wegmessung im Schmalgang mit Drehzahlsensoren an beiden Radachsen ausgestattet sind. Auf Basis eines solchen Fahrzeugtyps kann somit mit geringem Entwicklungsaufwand und regelmäßig ohne erheblichen zusätzlichen Herstellungaufwand ein erfindungsgemäßes Fahrzeug bereitgestellt werden. Bei solch einem Fahrzeug kommt dann auch eine Nachrüstung zur Verwirklichung der Erfindungsvorschläge in Betracht, die sich im Wesentlichen als Umprogrammierung einer Steuerung bzw. Laden eines die Erfindung implementierenden Steuerprogramms in die Steuerung des Fahrzeugs darstellen kann.

Im Rahmen des Verfahrens kann man vorteilhaft vorsehen, dass das Verhältnis zur Radumdrehung nach einem Lastwechsel für einen definierten Fahrweg (festes Wegdelta) ermittelt und hieraus das Lastgewicht ermittelt oder abgeschätzt, insbesondere berechnet, wird. Für den weiteren Fahrweg kann dann das Verhältnis der Radumdrehungen weiterhin ermittelt werden, um die Gewichtsmessung weiter zu überwachen.

Für eine hohe Genauigkeit der Gewichtsmessung über das Verhältnis der Radumdrehungen kann der Radverschleiß auf Basis definierter Fahrstrecken ermittelt werden, beispielsweise unter Nutzung von ohnehin vorhandenen, beispielsweise in einem Schmalgang eingebrachten Wegmarken (etwa Transponder). Vorteilhaft kann für die Radverschleißbestimmung eine Fahrt mit abgesenkten Gabeln (keine Last auf den Gabeln) erfolgen, indem über das dann bekannte Fahrzeuggewicht die Radverschleißermittlung erfolgt.

Die Erfindung wird im Folgenden anhand eines Ausführungsbeispiels unter Bezugnahme auf die Figuren näher erläutert.

Fig. 1  zeigt schematisch einen Gabelstapler gemäß einem Ausführungsbeispiel der Erfindung.

Fig. 2  dient zur Erläuterung des so genannten "dynamischen Rollradius" und zeigt in Teilfigur 2a) einen eingefederten Reifen und in Teilfigur 2b) ein starres Rad mit gleichen Abrollumfang wie das eingefederte Rad.

Fig. 3  zeigt schematisch eine Radfelge mit einer durch die Radpressung verformten (eingefederten) Bandage.

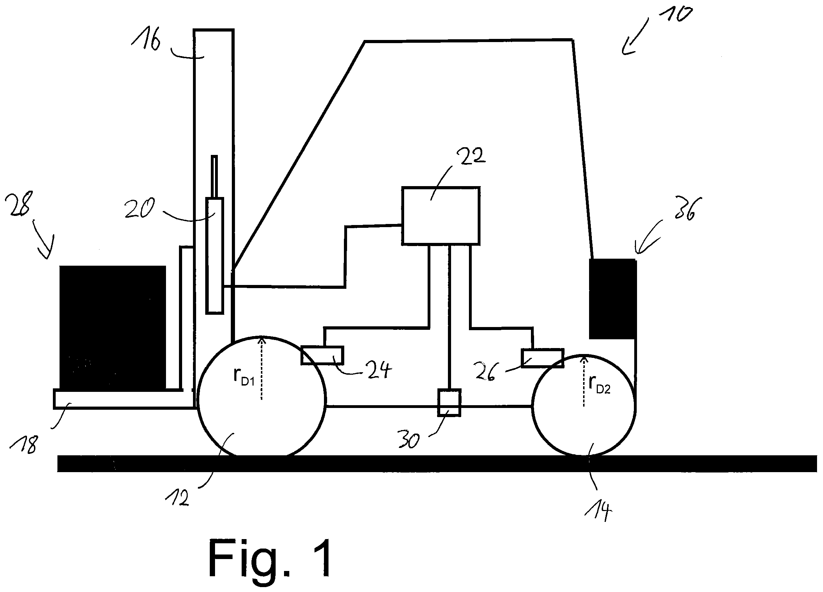

Bei einem in Fig. 1 dargestellten Flurförderzeug 10 handelt es sich um einen Gabelstapler mit einem vorderen Lastradpaar 12 und wenigstens einem hinteren Rad 14, beispielsweise einem hinteren Radpaar 14. Ohne Beschränkung der Allgemeinheit kann es sich bei dem hinteren Rad bzw. den hinteren Rädern 14 um das Antriebsrad bzw. die Antriebsräder handeln. Der Gabelstapler 10 weist auf übliche Art und Weise ein Hubgerüst 16 mit einer Lastgabel 18 auf, der wenigstens ein hydraulischer Hubzylinder 20 zugeordnet ist. Der Gabelstapler ist mit wenigstens einem Fahrantrieb, beispielsweise einem elektrischen Fahrantrieb, ausgestattet, auf den eine Steuerung 22 wirkt. Den vorderen Rädern 12 und dem hinteren Rad bzw. den hinteren Rädern 14 ist jeweils ein Drehzahlsensor 24 bzw. 26 zugeordnet, die zur Erfassung der Umdrehungen oder/und der Umdrehungsgeschwindigkeiten der Räder dienen und entsprechende Sensorsignale an die Steuerung 22 liefern.

Der Gabelstapler 10 kann mit einem Drucksensor oder dergleichen in Zuordnung zu dem Hubzylinder 20 ausgeführt sein, um das Lastgewicht 28 einer von der Gabel 18 aufgenommenen Last zu erfassen. Zusätzlich oder alternativ ist nach der Erfindung eine Lastgewichtermittlung oder -abschätzung auf Basis der Sensoren 24 und 26 realisiert, wie noch näher erläutert wird. Es kann ein Wegmarkensensor 30 vorgesehen sein, der auf Fahrstrecken definierter Länge definierende Wegmarken anspricht, beispielsweise optische Wegmarken oder elektrische, magnetische oder elektromagnetische Wegmarken, beispielsweise so genannte Transponder, etwa RFID-/NFC-Transponder.

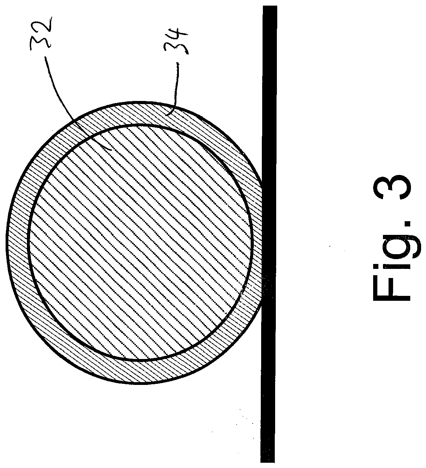

Bei den Rädern des Fahrzeugs 10 kann es sich um so genannte Bandagenräder handeln, die eine Radfelge 32 und eine von dieser getragenen Bandagen-Reifen 34 (auch nur kurz als "Bandage" bekannt) umfassen, wie in Fig. 3 schematisch dargestellt. Unter dem Gewicht des Fahrzeugs und der ggf. von dieser aufgenommenen Last wird die Bandage mehr oder weniger stark verformt. Die Bandage federt ein und es entsteht eine Abplattung, mit nach beiden Seiten verdrängtem Bandagenmaterial, so dass sich ein so genannter "Latsch" bildet. Der Begriff "Latsch" bezeichnet die Kontaktfläche zwischen dem Reifen und der Fahrbahn, die bei einem Reifen ohne Profil auf einem ebenen Untergrund regelmäßig eine zusammenhängende Fläche bilden wird. Der Außenumfang der Bandage ist dann nicht mehr kreisförmig, so dass ein von der Einfederung abhängiger Abrollumfang resultiert. Für einen gegebenen Flächeninhalt hat nämlich der ideale Kreis den kleinsten Umfang und jede Abweichung gegenüber dem idealen Kreis führt unter der Voraussetzung des gleichen Flächeninhalts zu einem größeren Umfang. Die Fig. 3 zeigt die schematisch dargestellte Einfederung der Bandage 34.

Der wirksame Abrollumfang der Räder 12 und des Rads 14 bzw. der Räder 14 ist also abhängig von der auf das jeweilige Rad wirkenden Gewichtslast. Die Gewichtslast setzt sich zusammen aus dem Gewicht des unbeladenen Fahrzeugs 10, also ohne eine von der Gabel 18 aufgenommene Last 28, und dem beim beladenen Fahrzeug hinzukommenden Lastgewicht der aufgenommenen Last.

Typischerweise weist ein Gabelstapler ein Gegengewicht 36 in einem von der Gabel 18 ferneren Bereich des Fahrzeugs auf. Dieses Gegengewicht belastet primär das von der Gabel 18 fernere Rad 14 bzw. die von der Gabel 18 ferneren Räder 14, und die Aufnahme einer Last durch die Gabel 18 kann dann zu einer gewissen Entlastung des hinteren Rads 14 bzw. der hinteren Räder 14 führen. Durch die Aufnahme einer Last 28 mittels der Gabel 18 resultiert aber auf jeden Fall eine entsprechende Erhöhung der auf die vorderen Räder 12 wirkenden Gesamt-Gewichtslast.

Allgemein ist also festzustellen, dass die der Lastaufnahme (hier der Gabel 18) näheren Räder 12 und das von der Lastaufnahme (hier der Gabel 18) fernere Rad 14 bzw. die hiervon fernen Räder 14 gegenüber der Belastung durch das unbeladene Fahrzeug unterschiedlich durch eine in die Lastaufnahme aufgenommene Last belastet werden, wobei im Falle eines Gegengewichts nahe zu den hinteren Rädern sogar eine Entlastung der hinteren Räder durch die Aufnahme einer Last in die Lastaufnahme erfolgen kann. Es ist somit nicht nur das Einfedern der Reifen, insbesondere Bandagen, bzw. allgemein der Räder lastabhängig, sondern auch das Verhältnis dieser Einfederungen. Die Einfederungen bestimmen die Abrollumfänge, so dass nicht nur die Abrollumfänge lastabhängig sind, sondern auch das Verhältnis der Abrollumfänge lastabhängig ist.

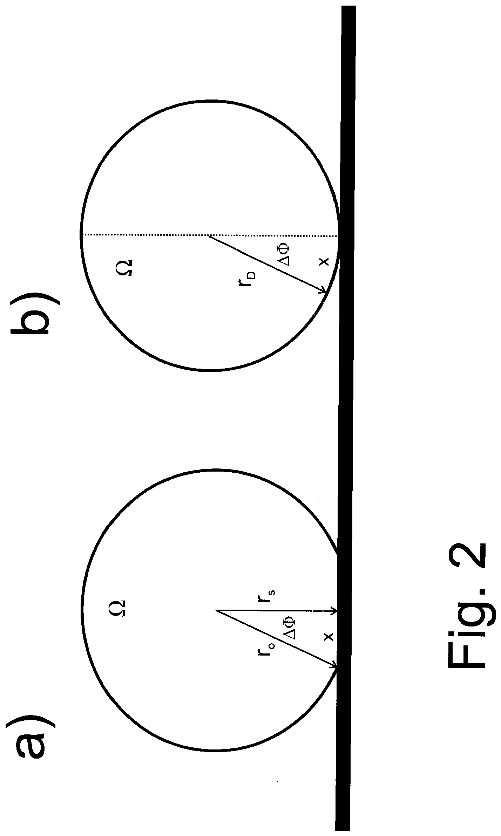

Der Einfluss auf die Umdrehungen der Räder beim Fahren über eine definierte Strecke bzw. der Einfluss auf die Drehgeschwindigkeiten der Räder lässt sich anhand der Fig. 2 näher betrachten. Auf Basis der regelmäßig berechtigten Annahme, dass die Reifenumfangsflächenelemente im Latsch auf der Fahrbahn haften, wird sich das den eingefederten Reifen aufweisende Rad bei einer Winkeldrehung $\Delta\phi$ um die Strecke x weiter drehen (Fig. 2a). Mit $r_0$ als unverformtem Radradius, $\Delta r$ als Reifeneinfederung und $r_s = r_0 - \Delta r$ als statischem Reifenradius im eingefederten Zustand gilt

$$r_0 \sin \Delta\Phi = x$$

$$r_0 \cos \Delta\Phi = r_s$$

Vergleicht man die Fortbewegung des Reifens mit dem Abrollen eines starren Rades (vgl. Fig. 2b)), dann muss dessen so genannter dynamischer Rollradius $r_D$ so gewählt werden, dass bei der Winkeldrehung $\Delta\phi$ ebenfalls die Strecke x zurückgelegt wird, also

$$x = r_D \Delta\Phi$$

Hieraus ergibt sich für den dynamischen Rollradius

$$r_D = r_0 \sin \Delta\Phi / \Delta\Phi$$

Für kleine, aber endliche Winkeldrehungen können die Sinus-Funktion und die Cosinus-Funktion in Reihen entwickelt werden, mit den näherungsweisen Ergebnissen

$$r_D = r_0 \ (1\text{-}1/6 \ \Delta\Phi^2)$$

und

$$r_s / r_0 \ = \cos\Delta\Phi = 1 - 1/2 \ \Delta\Phi^2 \ \text{oder} \ \Delta\Phi^2 = 2 \ (1 - r_s / r_0)$$

woraus dann für den dynamischen Rollradius näherungsweise

$$r_D = r_0 \ = 2/3 \ r_0 + 1/3 \ r_s$$

resultiert. Der dynamische Rollradius hängt also wegen $r_s = r_s(Fz)$ von der Radlast $F_z$ ab und ist hier in erster Näherung aus dem unverformten Radradius $r_0$ und dem statischen Radradius $r_s$ im unter der Radlast verformten Zustand berechnet.

Rotieren die Räder mit der Winkelgeschwindigkeit $\Omega$, so werden die Oberflächenelemente des Radumfangs mit der mittleren Geschwindigkeit

$$V_t = r_D \ \Omega$$

durch den Latsch transportiert.

Bezug nehmend auf das Ausführungsbeispiel der Fig. 1 resultiert somit für das Vorderrad 12 ein lastabhängiger dynamischer Rollradius $r_{D1}$ und für das Hinterrad bzw. die hinteren Räder 14 ein dynamischer Rollradius $r_{D2}$, denen jeweils ein Abrollumfang $U_{D1} = 2 \pi r_{D1}$ bzw. $U_{D2} = 2\pi r_{D2}$ entspricht.

Bezogen auf eine Strecke S, über die die Räder abrollen, ergibt sich als jeweilige Umdrehungszahl $Z_{D1}$ für das Vorderrad 12 und $Z_{D2}$ für das Hinterrad:

$$Z_{D1} = S / U_{D1}$$

$$Z_{D2} = S / U_{D2}$$

Das Drehzahlverhältnis zwischen der Drehzahl des vorderen Rads bzw. der vorderen Räder und des hinteren Rads bzw. der hinteren Räder ist dann

$$V = Z_{D1} / Z_{D2} = r_{D2} / r_{D1},$$

wobei für die dynamischen Rollradien $r_{D1}$ und $r_{D2}$ der Räder die oben angegebenen Näherungen auf Basis der Reihenentwicklungen eingesetzt werden können.

Auf Grundlage des vorstehend erläuterten Wirkprinzips kann die Steuerung 22 des Flurförderzeugs 10 auf Basis der mittels der Sensoren 24 und 26 ermittelten Drehzahlverhältnisses zwischen einer ersten Drehzahl des vorderen Rads 12 bzw. der vorderen Räder 12 und einer zweiten Drehzahl des hinteren Rads 14 bzw. der hinteren Räder 14 das Lastgewicht einer von der Gabel 18 aufgenommenen Last 28 ermitteln oder zumindest abschätzen. Es können auch für jedes der beiden vorderen Räder 12 oder/und für jedes zweier hinterer Räder 14 die Zahl an Umdrehungen bzw. eine Drehgeschwindigkeit aufgenommen und hieraus das Lastgewicht repräsentierende Drehzahlverhältnisse bestimmt werden.

Für die Bestimmung des Lastgewichts kann die Steuerung 22 das bestimmte Drehzahlverhältnis mit in der Steuerung oder einem dieser zugeordneten Speicher abgelegten Kalibrierungsdaten vergleichen, die zumindest das Drehzahlverhältnis der Räder für ein unbeladenes Flurförderzeug und das Drehzahlverhältnis für das Flurförderzeug mit einer definierten, durch die Gabel 18 aufgenommenen Last, beispielsweise der zulässigen Maximallast, umfassen und eine Interpolation des Lastgewichts der momentan aufgenommenen Last ermöglichen. Die entsprechenden Kalibrierungsdaten können bei der Herstellung des Furförderzeugs in die Steuerung 22 eingelernt worden sein. Es kommt aber auch in Betracht, dass ein Anwender diese Kalibrierungsdaten durch Fahren mit dem Fahrzeug entlang einer definierten Strecke im unbeladenen Zustand sowie im mit einer definierten Last beladenen Zustand erfasst und in die Steuerung einlernt.

Soweit hier von einem Fahren entlang einer definierten Strecke die Rede ist, kommt es für die Lastgewichtsbestimmung letztlich nur auf eine Mindeststrecke zur Erzielung einer Mindestgenauigkeit an. Von größerer Bedeutung ist das Fahren entlang einer definierten Strecke für die Bestimmung eines Verschleißzustands der Räder im unbeladenen Zustand des Fahrzeugs. Es kann dann auf an sich bekannte Art und Weise die Anzahl von Umdrehungen der Räder beim Abrollen über die definierte Strecke erfasst und hieraus der Verschleißzustand der Räder ermittelt werden, welcher als Parameter in der Steuerung 22 bzw. einem zugeordneten Speicher abspeicherbar ist, um bei der Ermittlung bzw. Abschätzung des Lastgewichts berücksichtigt zu werden. Besonders zweckmäßig kann auch eine Korrektur der für die einzelnen Räder erfassten Zahl von Umdrehungen bzw. Drehgeschwindigkeiten zur Berücksichtigung des Radverschleißes durchgeführt werden, so dass aus den erfassten Drehzahlwerten verschleißkompensierte Drehzahlwerte und hieraus das verschleißkompensierte Drehzahlverhältnis oder aus dem bestimmten Drehzahlverhältnis das verschleißkompensierte Drehzahlverhältnis berechnet wird. Auf diesen verschleißkompensierten Drehzahlwerten bzw. dem verschleißkompensierten Drehzahlverhältnis kann man vorteilhaft die Ermittlung bzw. Abschätzung des Lastgewichts aufsetzen.

Anstelle von Umdrehungszahlen können alle Rechnungen und Bestimmungen auch auf Basis von Drehgeschwindigkeiten der Räder erfolgen, sofern diese mit hinreichender Genauigkeit mittels eines entsprechenden Drehgebers erfasst werden können. Wenn hier von einem Drehzahlsensor 24 bzw. 26 des Fahrzeugs 10 die Rede ist, so soll dies also nicht nur einen eine Zahl von Umdrehungen erfassenden Sensor meinen, sondern auch Drehgeschwindigkeitssensoren mit umfassen.

Es bietet sich aber an, unter Nutzung von Konzepten herkömmlicher Wegmesssysteme bzw. Positionierungssysteme das Drehzahlverhältnis aus erfassten Umdrehungen der Fahrzeugräder zu bestimmen, so dass eine herkömmliche Sensorik verwendbar ist und nur eine andere oder zusätzliche Auswertung der Sensordaten erfolgt.

**Patentansprüche**

1. Verfahren zur Ermittlung oder Abschätzung eines Lastgewichts einer durch ein gewerbliches Fahrzeug, insbesondere durch ein Flurförderzeug, etwa ein Gabelstapler (10), aufgenommenen Last (28), umfassend:

   a) Bestimmen eines Drehzahlverhältnisses zwischen einer ersten Drehzahl wenigstens eines von einer in einer Lastaufnahme (18) des Fahrzeugs aufgenommenen Last belasteten ersten Rads (12) und einer zweiten Drehzahl wenigstens eines von einer in der Lastaufnahme aufgenommenen Last weniger stark oder nicht belasteten oder durch eine in der Lastaufnahme aufgenommene Last entlasteten zweiten Rads (14) des fahrenden Fahrzeugs (10), welches die Last in der Lastaufnahme aufgenommen hat;

   **gekennzeichnet durch**:
   b) Ermitteln oder Abschätzen des Lastgewichts der aufgenommenen Last (28) auf Grundlage des bestimmten Drehzahlverhältnisses und vorgegebener Referenzdaten;
   wobei das Verfahren ferner eine Bestimmung eines Verschleißzustands der Räder (12, 14) umfasst, welcher bei der Ermittlung oder Abschätzung des Lastgewichts berücksichtigt wird, und
   wobei der Verschleißzustand der Räder (12, 14) am Fahrzeug (10) ohne aufgenommene Last bestimmt wird, indem beim Fahren des Fahrzeugs ohne aufgenommene Last über eine definierte Strecke eine auftretende Anzahl von Umdrehungen des wenigstens einen ersten Rads und eine beim Fahren über die definierte Strecke auftretende Anzahl von Umdrehungen des wenigstens einen zweiten Rads direkt oder indirekt gemessen oder bestimmt werden.

2. Verfahren nach Anspruch 1, **dadurch gekennzeichnet, dass** das Drehzahlverhältnis bestimmt wird, indem beim Fahren des Fahrzeugs (10) eine über eine definierten Strecke oder in einem definierten Zeitintervall auftretende Anzahl von Umdrehungen des wenigstens einen ersten Rads (12) und eine beim Fahren über die definierte Strecke oder in dem definierten Zeitintervall auftretende Anzahl von Umdrehungen des wenigstens einen zweiten Rads (14) direkt oder indirekt gemessen oder bestimmt werden, dass hieraus das Drehzahlverhältnis bestimmt wird und dass aus dem so bestimmten Drehzahlverhältnis das Lastgewicht ermittelt oder abgeschätzt wird.

3. Verfahren nach Anspruch 1 oder 2, **dadurch gekennzeichnet, dass** das Drehzahlverhältnis für eine aufgenommene Last (28) wenigstens einmal aus Sensordaten umfassend Drehzahldaten oder/und Drehgeschwindigkeitsdaten eines dem ersten Rad (12) zugeordneten Sensors (24) und Drehzahldaten oder/und Drehgeschwindigkeitsdaten eines dem zweiten Rad (14) zugeordneten Sensors (26) bestimmt wird, um das Lastgewicht zu ermitteln oder abzuschätzen,
wobei vorzugsweise das Drehzahlverhältnis für eine aufgenommene Last wiederholt oder kontinuierlich aus den Sensordaten bestimmt wird, um wiederholt oder kontinuierlich das Lastgewicht zu ermitteln oder abzuschätzen.

4. Verfahren nach einem der Ansprüche 1 bis 3, **dadurch gekennzeichnet, dass** die Referenzdaten ein Lastfrei-Referenz-Drehzahlverhältnis zwischen dem wenigstens einen ersten Rad (12) und dem wenigstens einem zweiten Rad (14) für das Fahrzeug (10) ohne aufgenommene Last bei einem Ausgangszustand der Räder, vorzugsweise bei verschleißfreien Rädern, umfassen;
oder/und
dass die Referenzdaten wenigstens ein Last-Referenz-Drehzahlverhältnis zwischen dem wenigstens einen ersten Rad (12) und dem wenigstens einem zweiten Rad (14) für das Fahrzeug (10) mit einer bzw. einer jeweiligen aufgenommenen definierten Kalibrierungslast bei einem Ausgangszustand der Räder, vorzugsweise bei verschleißfreien Rädern, umfassen.

5. Verfahren nach Anspruch 4, **dadurch gekennzeichnet, dass** das Lastgewicht mittels des bestimmten Drehzahlverhältnisses aus der Lastfrei-Referenz-Drehzahlverhältnis und dem wenigstens einen Last-Referenz-Drehzahlverhältnis auf Basis des Lastgewichts der Kalibrierungslast bzw. der jeweiligen Kalibrierungslast und ggf. eines Fahrzeuggewichts des Fahrzeugs (10) ohne aufgenommene Last interpoliert wird.

6. Verfahren nach einem der Ansprüche 1 bis 5, **dadurch gekennzeichnet, dass** ein den Verschleißzustand berücksichtigendes Referenz-Drehzahlverhältnis zwischen dem wenigstens einen ersten Rad und dem wenigstens einem zweiten Rad für das Fahrzeug ohne aufgenommene Last oder/und Drehzahl-Korrekturwerte für die Räder bestimmt werden.

7. Verfahren nach Anspruch 6, **dadurch gekennzeichnet, dass** die Referenzdaten, auf deren Grundlage das Lastgewicht ermittelt oder abgeschätzt wird, den Verschleißzustand bzw. wenigstens eines von dem Verschleißzustand, dem Referenz-Drehzahlverhältnis und den Drehzahl-Korrekturwerten umfassen.

8. Verfahren nach Anspruch 7 und nach Anspruch 2 oder 3, **dadurch gekennzeichnet, dass** die jeweilige Anzahl von Umdrehungen bzw. die Drehzahldaten oder/und Drehgeschwindigkeitsdaten mittels der Drehzahl-Korrekturwerte hinsichtlich des Verschleißzustands der Räder kompensiert und das Drehzahlverhältnis aus kompensierten Drehzahldaten bzw. Drehgeschwindigkeitsdaten bestimmt wird, um das Lastgewicht zu ermitteln oder abzuschätzen.

9. Verfahren zum Steuern oder/und Regeln zumindest eines Fahrantriebs eines gewerblichen Fahrzeug (10), insbesondere eines Flurförderzeugs, etwa ein Gabelstapler, umfassend die Ermittlung oder Abschätzung des Lastgewichts einer durch das Fahrzeug aufgenommenen Last (28) gemäß dem Verfahren nach einem der vorhergehenden Ansprüche.

10. Verfahren nach Anspruch 9, **dadurch gekennzeichnet,**
**dass** das Fahrzeug keinen von der Bestimmung des Drehzahlverhältnisses unabhängigen Lastsensor zur Bestimmung des Lastgewichts einer vom Fahrzeug aufgenommenen Last aufweist, oder
**dass** das Fahrzeug wenigstens einen von der Bestimmung des Drehzahlverhältnisses unabhängigen Lastsensor zur Bestimmung des Lastgewichts einer vom Fahrzeug aufgenommenen Last aufweist und dass das Lastgewicht zusätzlich auf Basis des bestimmten Drehzahlverhältnisses ermittelt oder abgeschätzt wird und vorzugsweise zur Plausibilitätsüberprüfung der Lastgewichtsbestimmung mittels des Lastsensors dient.

11. Verfahren nach Anspruch 9 oder 10, **dadurch gekennzeichnet, dass** eine Fahrdynamik des Fahrzeugs in Abhängigkeit von dem Lastgewicht einer aufgenommenen Last gestaltet wird oder/und dass ein dem Lastgewicht zugeordnetes Fahrprofil aus mehreren unterschiedlichen Lastgewichten bzw. Lastgewichtsbereichen zugeordneten Fahrprofilen ausgewählt wird.

12. Verfahren nach einem der Ansprüche 1 bis 11, **dadurch gekennzeichnet, dass** das wenigstens eine erste Rad ein vorderes Rad und das wenigstens eine zweite Rad ein hinteres Rad (14) des Fahrzeugs ist.

13. Gewerbliches Fahrzeug, insbesondere Flurförderzeug, etwa ein Gabelstapler (10), welches wenigstens einen Fahrantrieb, wenigstens eine Lastaufnahme (18) und wenigstens ein von einer in der Lastaufnahme des Fahrzeugs aufgenommenen Last (28) belastetes erstes Rad (12) und wenigstens ein von einer in der Lastaufnahme aufgenommenen Last weniger stark oder nicht belastetes oder durch eine in der Lastaufnahme aufgenommene Last entlastetes zweites Rad (14) aufweist, wobei eine Steuerung (22) des Fahrzeugs oder dessen Fahrantriebs mit wenigstens einem dem/einem ersten Rad (12) zugeordneten ersten Drehzahlsensor (24) und mit wenigstens einem dem/einem zweiten Rad des Fahrzeugs zugeordneten zweiten Drehzahlsenor (26) gekoppelt ist,
   **dadurch gekennzeichnet,**
   **dass** die Steuerung dafür ausgeführt oder programmiert ist, ein Drehzahlverhältnis zwischen einer durch den ersten Drehzahlsensor (24) erfassten ersten Drehzahl des ersten Rads (12) und einer durch den zweiten Drehzahlsensor (26) erfassten zweiten Drehzahl des zweiten Rads (14) zu bestimmen und hieraus das Lastgewicht einer in der Lastaufnahme aufgenommenen Last (28) zu ermitteln oder abzuschätzen, um wenigstens eine sich auf das Lastgewicht beziehende oder das Lastgewicht berücksichtigende Funktion, insbesondere eine Steuer- oder/und Regelfunktion, zu erfüllen,
   wobei die Steuerung ferner dafür ausgeführt oder programmiert ist, einen Verschleißzustand der Räder (12, 14) zu bestimmen, welcher bei der Ermittlung oder Abschätzung des Lastgewichts berücksichtigt wird, und
   wobei die Steuerung dafür ausgeführt oder programmiert ist, den Verschleißzustand der Räder (12, 14) am Fahrzeug (10) ohne aufgenommene Last derart zu bestimmen, dass sie beim Fahren des Fahrzeugs ohne aufgenommene Last über eine definierte Strecke eine auftretende Anzahl von Umdrehungen des wenigstens einen ersten Rads und eine beim Fahren über die definierte Strecke auftretende Anzahl von Umdrehungen des wenigstens einen zweiten Rads direkt oder indirekt misst oder bestimmt.

14. Fahrzeug nach Anspruch 13, **dadurch gekennzeichnet, dass** die Steuerung (22) dafür ausgeführt oder programmiert ist, das Verfahren nach einem der Ansprüche 1 bis 12 auszuführen.

15. Fahrzeug nach Anspruch 14, **dadurch gekennzeichnet, dass** die Steuerung (22) mit wenigstens einem auf optische oder elektrische oder magnetische oder elektromagnetische Markierungen oder/und auf Transponder ansprechenden Sensor oder Gerät (30) des Fahrzeugs gekoppelt ist, um mittels des ersten (24) und des zweiten (26) Drehzahlsensors beim Fahren über eine durch wenigstens eine Markierung oder/und wenigstens einen Transponder definierte Referenzfahrstrecke auftretende Umdrehungen des wenigstens einen ersten Rads und des wenigstens einen zweiten Rads zu erfassen und bei der Durchführung des Verfahrens auszuwerten.

**Claims**

1. Method for determining or estimating a load weight of a load (28) lifted by a commercial vehicle, in particular by an industrial truck, such as a forklift (10), comprising:

   a) ascertaining a speed ratio between a first speed of at least one first wheel (12) loaded by a load that is lifted in a load lifter (18) of the vehicle and a second speed of at least one second wheel (14) of the moving vehicle (10) which is loaded less heavily or is not loaded by a load that is lifted in the load lifter or is relieved by a load that is lifted in the load lifter, which second wheel has lifted the load in the load lifter;

   **characterised by**:

   b) determining or estimating the load weight of the lifted load (28) on the basis of the ascertained speed ratio and predetermined reference data;

   the method further comprising ascertaining a state of wear of the wheels (12, 14), which is taken into account when determining or estimating the load weight, and
   the state of wear of the wheels (12, 14) on the vehicle (10) without a lifted load being ascertained by directly or indirectly measuring or ascertaining a number of revolutions of the at least one first wheel that occur when driving the vehicle without a lifted load over a defined distance and a number of revolutions of the at least one second wheel that occur when driving over the defined distance.

**2.** Method according to claim 1, **characterised in that** the speed ratio is ascertained by directly or indirectly measuring or ascertaining a number of revolutions of the at least one first wheel (12) that occur when driving the vehicle (10) over a defined distance or in a defined time interval and a number of revolutions of the at least one second wheel (14) that occur when driving over the defined distance or in the defined time interval, **in that** the speed ratio is ascertained therefrom and **in that** the load weight is determined or estimated from the speed ratio ascertained in this way.

**3.** Method according to either claim 1 or claim 2, **characterised in that** the speed ratio for a lifted load (28) is ascertained at least once from sensor data comprising speed data and/or rotational frequency data from a sensor (24) that is associated with the first wheel (12) and speed data and/or rotational frequency data from a sensor (26) that is associated with the second wheel (14) in order to determine or estimate the load weight, the speed ratio for a lifted load preferably being repeatedly or continuously ascertained from the sensor data in order to repeatedly or continuously determine or estimate the load weight.

**4.** Method according to any of claims 1 to 3, **characterised in that** the reference data comprise a load-free reference speed ratio between the at least one first wheel (12) and the at least one second wheel (14) for the vehicle (10) without a lifted load in an initial state of the wheels, preferably for wear-free wheels;
and/or **in that** the reference data comprise at least one load reference speed ratio between the at least one first wheel (12) and the at least one second wheel (14) for the vehicle (10) having a calibration load or a particular lifted, defined calibration load in an initial state of the wheels, preferably for wear-free wheels.

**5.** Method according to claim 4, **characterised in that** the load weight is interpolated by means of the ascertained speed ratio from the load-free reference speed ratio and the at least one load reference speed ratio on the basis of the load weight of the calibration load or the particular calibration load and optionally of a vehicle weight of the vehicle (10) without a lifted load.

**6.** Method according to any of claims 1 to 5, **characterised in that** a reference speed ratio, which takes into account the state of wear, between the at least one first wheel and the at least one second wheel for the vehicle without a lifted load and/or speed correction values for the wheels are ascertained.

**7.** Method according to claim 6, **characterised in that** the reference data, on the basis of which the load weight is determined or estimated, comprise the state of wear or at least one of the state of wear, the reference speed ratio and the speed correction values.

**8.** Method according to claim 7 and according to either claim 2 or claim 3, **characterised in that** the particular number of revolutions or the speed data and/or rotational frequency data is compensated with regard to the state of wear of the wheels by means of the speed correction values, and the speed ratio is ascertained from compensated speed data or rotational frequency data in order to determine or estimate the load weight.

**9.** Method for open-loop and/or closed-loop control of at least one drive of a commercial vehicle (10), in particular an industrial truck, such as a forklift, comprising determining or estimating the load weight of a load (28) lifted by the vehicle according to the method according to any of the preceding claims.

**10.** Method according to claim 9, **characterised in that** the vehicle has no load sensor that is independent of the ascertainment of the speed ratio for ascertaining the load weight of a load lifted by the vehicle, or **in that** the vehicle has at least one load sensor that is independent of the ascertainment of the speed ratio for ascertaining the load weight of a load lifted by the vehicle, and **in that** the load weight is additionally determined or estimated on the basis of the ascertained speed ratio and is preferably used for examining the plausibility of the load weight ascertainment by means of the load sensor.

**11.** Method according to either claim 9 or claim 10, **characterised in that** driving dynamics of the vehicle are designed depending on the load weight of a lifted load and/or **in that** a driving profile associated with the load weight is selected from a plurality of driving profiles associated with different load weights or load weight ranges.

**12.** Method according to any of claims 1 to 11, **characterised in that** the at least one first wheel is a front wheel and the at least one second wheel is a rear wheel (14) of the vehicle.

**13.** Commercial vehicle, in particular an industrial truck, such as a forklift (10), which has at least one drive, at least one load lifter (18) and at least one first wheel (12) which is loaded by a load (28) that is lifted in the load lifter of the vehicle, and at least one second wheel (14) which is loaded less heavily or is not loaded by a load that is lifted in the load lifter or is relieved by a load that is lifted in the load lifter, an open-loop control system (22) of the vehicle or the drive thereof being coupled to at least one first speed sensor (24) associated with the/a first wheel (12) and to at least one second speed sensor (26) associated with the/a second wheel of the vehicle, **characterised in that** the open-loop control system is designed or programmed to ascertain a speed ratio between a speed of the first wheel (12) detected by the first speed sensor (24) and a second speed of the second wheel (14) detected by the second speed sensor (26), and therefrom to determine or estimate the load weight of a load (28) that is lifted in the load lifter in order to fulfil at least one function, in particular an open-loop and/or closed-loop control function, that relates to the load weight or takes into account the load weight, the open-loop control system being further designed or programmed to ascertain a state of wear of the wheels (12, 14), which is taken into account when determining or estimating the load weight, and the open-loop control system being designed or programmed to determine the state of wear of the wheels (12, 14) on the vehicle (10) without a lifted load such that said open-loop control system directly or indirectly measures or ascertains a number of revolutions of the at least one first wheel that occur when driving the vehicle without a lifted load over a defined distance and a number of revolutions of the at least one second wheel that occur when driving over the defined distance.

14. Vehicle according to claim 13, **characterised in that** the open-loop control system (22) is designed or programmed to carry out the method according to any of claims 1 to 12.

15. Vehicle according to claim 14, **characterised in that** the open-loop control system (22) is coupled to at least one sensor or device (30) of the vehicle which responds to optical or electrical or magnetic or electromagnetic markings and/or to transponders in order to detect, by means of the first (24) and the second (26) speed sensor, revolutions of the at least one first wheel and the at least second wheel that occur when driving over a reference travel distance defined by at least one marking and/or at least one transponder, and to evaluate said revolutions when carrying out the method.

**Revendications**

1. Procédé de détermination ou d'estimation d'un poids de charge (28) d'une charge reçue par un véhicule commercial, en particulier par un chariot de manutention, tel qu'un chariot élévateur (10), comprenant :

   a) déterminer un rapport de vitesse de rotation entre une première vitesse de rotation d'au moins une première roue (12) chargée par une charge reçue dans une réception de charge (18) du véhicule et une deuxième vitesse de rotation d'au moins une deuxième roue (14) moins lourdement chargée ou pas du tout chargée par une charge reçue dans la réception de charge ou qui est déchargée par une charge reçue dans la réception de charge du véhicule en déplacement (10) qui a reçu la charge dans la réception de charge; **caractérisé par**
   b) déterminer ou estimer le poids de charge de la charge reçue (28) sur la base du rapport de vitesse de rotation déterminé et de données de référence prédéterminées ;

   dans lequel le procédé comprend en outre une détermination d'un état d'usure des roues (12, 14) qui est pris en compte dans la détermination ou l'estimation du poids de charge, et
   dans lequel l'état d'usure des roues (12, 14) sur le véhicule (10) sans charge reçue est déterminé en mesurant ou en déterminant directement ou indirectement pendant le déplacement du véhicule sans charge reçue sur la distance définie un nombre de tours de ladite au moins une première roue et en déterminant pendant le déplacement du véhicule sur la distance définie un nombre de tours de ladite au moins une deuxième roue.

2. Procédé selon la revendication 1, **caractérisé en ce que** le rapport de vitesse de rotation est déterminé en mesurant ou en déterminant directement ou indirectement pendant le déplacement du véhicule (10) un nombre de tours de ladite au moins une première roue (12) se produisant sur une distance définie ou dans un intervalle de temps défini et un nombre de tours de ladite au moins une deuxième roue (14) se produisant pendant le déplacement sur la distance définie ou dans l'intervalle de temps défini, **en ce que** le rapport de vitesse de rotation est déterminée à partir de celui-ci et **en ce que** le poids de charge est déterminé ou estimé à partir du rapport de vitesse de rotation ainsi déterminé.

3. Procédé selon la revendication 1 ou 2, **caractérisé en ce que** le rapport de vitesse pour une charge reçue (28) est déterminé au moins une fois à partir de données de capteur comprenant des données du nombre de tours ou/et de la vitesse de rotation d'un capteur (24) associé à la première roue (12) et des données du nombre de tours ou/et de la vitesse de rotation d'un capteur (26) associé à la deuxième roue (14) afin de déterminer ou d'estimer le poids de charge,

dans lequel de préférence le rapport de vitesse de rotation pour une charge reçue est déterminé de manière répétée ou continue à partir des données de capteur afin de déterminer ou d'estimer le poids de charge de manière répétée ou continue.

4. Procédé selon l'une quelconque des revendications 1 à 3, **caractérisé en ce que** les données de référence comprennent un rapport de vitesse de rotation de référence sans charge entre ladite au moins une première roue (12) et ladite au moins une deuxième roue (14) pour le véhicule (10) sans charge reçue pour un état initial des roues, de préférence des roues sans usure ;

ou/et

que les données de référence comprennent au moins un rapport de vitesse de rotation de référence avec charge entre ladite au moins une première roue (12) et ladite au moins une deuxième roue (14) pour le véhicule (10) avec une ou respectivement une charge de calibrage défini reçue, pour un état initial des roues, de préférence des roues sans usure.

5. Procédé selon la revendication 4, **caractérisé en ce que** le poids de charge est interpolé au moyen du rapport de vitesse déterminé à partir du rapport de vitesse de rotation de référence sans charge et dudit au moins un rapport de vitesse de rotation de référence avec charge sur la base de poids de charge de la charge de calibrage ou de la charge de calibrage respective et éventuellement d'un poids de véhicule du véhicule (10) sans charge reçue.

6. Procédé selon l'une des revendications 1 à 5, **caractérisé en ce qu'**un rapport de vitesse de rotation de référence entre ladite au moins une première roue et ladite au moins une deuxième roue pour le véhicule sans charge reçue et/ou des valeurs de correction de la vitesse de rotation pour les roues sont déterminés en tenant compte de l'état d'usure.

7. Procédé selon la revendication 6, **caractérisée en ce que** les données de référence, sur la base desquelles le poids de charge est déterminé ou estimé, comprennent l'état d'usure ou au moins un parmi l'état d'usure, le rapport de vitesse de rotation de référence et les valeurs de correction de la vitesse de rotation.

8. Procédé selon la revendication 7 et selon la revendication 2 ou 3, **caractérisé en ce que** le nombre de tours respectif ou les données de nombre de tours ou/et les données de vitesse de rotation sont compensés au moyen des valeurs de correction de vitesse de rotation en ce qui concerne l'état d'usure des roues et le rapport de vitesse de rotation est déterminé à partir des données de nombre de tours ou des données de vitesse de rotation compensées afin de déterminer ou d'estimer le poids de charge.

9. Procédé de commande et/ou de régulation d'au moins un entraînement de déplacement d'un véhicule industriel (10), en particulier d'un chariot de manutention, tel qu'un chariot élévateur, comprenant la détermination ou l'estimation du poids de charge d'une charge (28) reçue par le véhicule selon le procédé selon l'une des revendications précédentes.

10. Procédé selon la revendication 9, **caractérisé en ce que**
le véhicule ne présente pas de capteur de charge indépendant de la détermination du rapport des vitesses de rotation pour déterminer le poids de charge d'une charge reçue par le véhicule, ou **en ce que** le véhicule présente au moins un capteur de charge indépendant de la détermination du rapport des vitesses de rotation pour déterminer le poids de charge d'une charge reçue par le véhicule, et **en ce que** le poids de charge est en outre déterminé ou estimé sur la base du rapport des vitesses de rotation déterminé et sert de préférence au contrôle de plausibilité de la détermination du poids de charge au moyen du capteur de charge.

11. Procédé selon la revendication 9 ou 10, **caractérisé en ce qu'**une dynamique de conduite du véhicule est adaptée en fonction du poids de charge d'une charge reçue et/ou qu'un profil de conduite associé au poids de charge est choisi parmi plusieurs profils de conduite associés à différents poids de charge ou plages de poids de charge.

12. Procédé selon l'une des revendications 1 à 11, **caractérisée en ce que** la première roue au moins est une roue avant et la deuxième roue au moins est une roue arrière (14) du véhicule.

13. Véhicule utilitaire, en particulier chariot de manutention, tel qu'un chariot élévateur (10), qui présente au moins un entraînement de déplacement, au moins une réception de charge (18) et au moins une première roue (12) chargée par une charge (28) reçue dans la réception de charge du véhicule et au moins une deuxième roue (14) qui est moins chargée ou pas du tout chargée par une charge reçue dans la réception de charge ou qui est déchargée par une charge reçue dans la réception de charge, dans lequel une commande (22) du véhicule ou de son entraînement de déplacement est couplé à au moins un premier capteur de vitesse (24) associé à la ou aux premières roues (12) et à au moins un deuxième capteur de vitesse (26) associé à la ou aux deuxièmes roues du véhicule,

**caractérisé en ce que**

la commande est adaptée ou programmée pour déterminer un rapport de vitesse de rotation entre une première vitesse de rotation de la première roue (12) détectée par le premier capteur de vitesse (24) et une deuxième vitesse de rotation de la deuxième roue (14) détectée par le deuxième capteur de vitesse (26), et déterminer ou estimer le poids de charge d'une charge (28) reçue dans la réception de charge, afin de remplir au moins une fonction relative au poids de charge ou tenant compte du poids de charge, en particulier une fonction de commande et/ou de régulation, la commande étant en outre adaptée ou programmée pour déterminer un état d'usure des roues (12, 14) pris en charge lors de la détermination ou de l'estimation du poids de charge,

et

la commande étant adaptée ou programmée pour déterminer un état d'usure des roues (12, 14) sur le véhicule (10) sans charge reçue en mesurant ou en déterminant directement ou indirectement pendant le déplacement du véhicule sur la distance définie un nombre de tours de ladite au moins une première roue et en déterminant pendant le déplacement du véhicule sur la distance définie une vitesse de rotation de ladite au moins une deuxième roue.

**14.** Un véhicule selon la revendication 13, **caractérisé en ce que** la commande (22) est adaptée ou programmée pour exécuter le procédé selon l'une quelconque des revendications 1 à 12.

**15.** Véhicule selon la revendication 14, **caractérisé en ce que** la commande (22) est couplée à au moins un capteur ou dispositif (30) du véhicule qui réagit à des marquages optiques ou électriques ou magnétiques ou électromagnétiques et/ou des transpondeurs, afin de détecter au moyen du premier (24) et du deuxième (26) capteur de vitesse de rotation les rotations de ladite au moins une première roue et de ladite au moins une deuxième roue qui se produisent pendant la conduite sur un trajet de conduite de référence défini par au moins un marquage et/ou au moins un transpondeur, et d'évaluer ces rotations lors de l'exécution du procédé.

# Fig. 1

EP 2 982 944 B1

Fig. 2

EP 2 982 944 B1

Fig. 3

**EP 2 982 944 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011053963 A1
- DE 102011076815 A1
- DE 102011076816 A1
- DE 102007047399 A1
- EP 2502759 A1